# FASCICULE DE BREVET EUROPEEN

(11) **EP 3 175 091 B1**
(45) Date de publication et mention de la délivrance du brevet: **31.10.2018**
(21) Numéro de dépôt: 15751051.2
(22) Date de dépôt: 21.07.2015
(51) Int. Cl.: F01D 21/00, F01D 25/16, F01D 25/18, F01D 5/02, F02C 7/28

(54) **ÉLÉMENT DE TURBOMACHINE COMPRENANT UN MOYEN D'ÉTANCHÉITÉ AUXILIAIRE ET PROCÉDÉ DE TEST DE CET ÉLÉMENT**
VORRICHTUNG EINER STRÖMUNGSMASCHINE MIT EINER HILFSDICHTUNG UND VERFAHREN ZUM PRÜFEN DIESER VORRICHTUNG
DEVICE OF A TURBIMACHINE WITH AN AUXILIARY SEALING MEAN AND A PROCESS FOR TESTING THIS DEVICE

(30) Priorité: 29.07.2014 FR 1457350
(43) Date de publication de la demande: 07.06.2017
(73) Titulaire: Safran Aircraft Engines, 75015 Paris (FR)
(72) Inventeur: LEUTARD, Florence, Irène, Noëlle, 77550 Moissy-Cramayel (FR); JAMON, Thibault, 77550 Moissy-Cramayel (FR); RENON, Olivier, 77550 Moissy-Cramayel (FR)
(74) Mandataire: Gevers & Orès
(86) Numéro de dépôt international: PCT/FR2015/052004
(87) Numéro de publication internationale: WO 2016/016545

(56) Documents cités:
- EP-A1- 1 577 495
- EP-A1- 1 757 777
- FR-A1- 2 644 843

## Description

### Domaine de l'invention et état de la technique :

La présente invention se rapporte au domaine des turbomachines et plus particulièrement à la conception des joints d'étanchéité entre un rotor et un stator, notamment à proximité d'un palier de guidage du rotor. Elle concerne notamment un procédé de test pour vérifier un joint d'étanchéité dans une enceinte de lubrification autour d'un tel palier.

Un turbomoteur comprend généralement, d'amont en aval dans le sens de l'écoulement des gaz, une soufflante, un ou plusieurs étages de compresseurs, une chambre de combustion, un ou plusieurs étages de turbines et une tuyère d'échappement des gaz. Des rotors, pouvant être couplés entre eux par différents systèmes de transmissions et d'engrenages, correspondent à ces différents éléments.

Par ailleurs, afin de permettre la lubrification et le refroidissement des paliers de guidage des corps rotatifs, le turboréacteur comporte de manière classique un circuit de lubrification. Le circuit de lubrification d'un palier comporte une enceinte de lubrification qui est formée par une partie de carter intérieur de la turbomachine entourant une portion de rotor de part et d'autre du palier.

Les extrémités axiales de cette enceinte de lubrification sont traversées par le rotor. Pour confiner l'huile dans l'enceinte, les passages du rotor au travers de l'enceinte sont généralement équipés de joints de type labyrinthe labyrinthe tels décrits dans le document de brevet EP-A1-1577495. Sous certaines conditions, un flux d'huile peut s'échapper de l'enceinte. La demande de brevet FR1260598 présente par exemple un tourillon conçu pour récupérer cette huile et la renvoyer dans le circuit de lubrification sans qu'elle s'échappe dans le flux d'air traversant la turbomachine.

Une autre façon, complémentaire, de limiter les pertes d'huile consiste à créer une dépressurisation de l'enceinte de lubrification. La demande de brevet WO2013083917 décrit, par exemple, un système utilisant des joints annulaires au passage du rotor pour assurer une étanchéité entre l'enceinte et un volume extérieur attenant, de manière à permettre de créer cette dépressurisation. Par ailleurs, la demande de brevet WO2014006338 présente une façon d'utiliser un joint radial segmenté (JRS) dans ce contexte.

Installé à l'amont de l'enceinte de lubrification, ce joint radial segmenté permet d'en contrôler la pression. A l'aval de cette même enceinte, l'étanchéité peut être assurée par un labyrinthe au passage du corps rotatif. La dépressurisation de l'enceinte entraîne que l'air y arrive de l'extérieur. De cette manière la différence de pression assure l'étanchéité du joint labyrinthe par rapport à l'huile.

Il est cependant primordial de s'assurer du bon fonctionnement du joint JRS car il participe fortement à l'équilibre des pressions dans l'enceinte. Or le montage du rotor se fait en général de l'aval vers l'amont. Le joint radial segmenté est fragile et peut être détérioré lorsque le rotor est monté dans le carter s'il le rencontre en n'étant pas correctement aligné. De plus, le joint radial segmenté n'est dans ce cas plus accessible pour faire un contrôle visuel de son état.

L'invention a pour premier objectif de proposer un moyen de contrôler simplement le fonctionnement du joint radial segmenté lorsque le rotor est installé dans le carter.

Par ailleurs, en aval, les projections d'huile provenant du palier peuvent nuire à l'efficacité des moyens d'étanchéité si elles les atteignent. Une solution serait d'éloigner les joints du palier mais l'espace axial dans l'environnement de la turbomachine est limité.

Un autre objectif de l'invention est de permettre une conception de l'enceinte autour du palier de guidage qui soit compacte axialement tout en protégeant les joints des projections d'huile.

### Exposé de l'invention :

A cet effet, l'invention concerne un élément comprenant un stator, un rotor, et un premier moyen d'étanchéité entre le rotor et le stator agencé pour être actif lorsque le rotor est dans une position de fonctionnement autour de son axe de rotation, élément caractérisé en ce qu'il comprend un moyen d'étanchéité auxiliaire en pression, entre le rotor et le stator, agencé pour que lesdits deux moyens d'étanchéité soient actifs lorsque le rotor est placé le long de son axe de rotation lors d'une opération de montage dans une position de test, le rotor et le stator formant, dans cette position de test, une enceinte entre lesdits deux moyens d'étanchéité, et en ce que le moyen auxiliaire d'étanchéité en pression est agencé pour être ou devenir inactif lorsque le rotor est placé dans une position de fonctionnement.

Le terme d'étanchéité en pression signifie que le moyen est suffisamment étanche aux gaz pour maintenir une différence de pression de part et d'autre. A contrario, on parlera aussi d'étanchéité à l'huile pour signifier que le moyen est capable de bloquer de l'huile mais pas forcément d'empêcher des fuites de gaz.

L'invention atteint son objectif par le fait que lorsque l'enceinte est formée entre les deux moyens d'étanchéité lorsque le rotor est placé dans la position de test, on peut établir, grâce au moyen auxiliaire d'étanchéité, une différence de pression entre l'enceinte fermée et son environnement, et tester l'état du premier moyen d'étanchéité par l'observation de l'évolution de la pression dans l'enceinte ou en dehors. Il n'est donc pas nécessaire, en particulier lorsque le joint est inaccessible lorsque le rotor est dans le stator, de démonter l'élément pour vérifier l'état de fonctionnement du moyen d'étanchéité. Par ailleurs, ce moyen auxiliaire d'étanchéité étant inactif lorsque la turbomachine fonctionne, il ne provoque pas de frottements inutiles lors du fonctionnement de la turbomachine.

Dans une première variante, le moyen auxiliaire d'étanchéité en pression est agencé pour être inactif avant tout fonctionnement de l'élément de turbomachine.

Avantageusement, le moyen d'étanchéité auxiliaire en pression comprend un joint d'étanchéité en pression solidaire de l'un des corps parmi le rotor ou le stator, agencé pour appuyer sur une surface cylindrique d'étanchéité lorsque le rotor est dans une position de test décalée axialement d'une distance déterminée par rapport à la position de fonctionnement et pour en être dégagé lorsque le rotor est en position de fonctionnement. Le joint peut être un joint de type « PTFE », pour polytétrafluoroéthylène, qui comprend une bague composée de ce matériau.

Avantageusement, l'élément comporte en outre un palier entre le stator et le rotor, ledit palier comportant des roulements entre une première et une deuxième bague, l'une d'entre elles étant solidaire du stator et l'autre étant solidaire du rotor, dont la première bague permet un glissement axial des roulements et comprend une extension axiale agencée pour servir de surface de guidage du rotor sur l'axe de rotation lors d'un déplacement de la position de fonctionnement vers la position de test ou inversement.

Cela permet de guider le rotor entre les positions de fonctionnement et de test, en limitant ainsi les risques de détérioration du premier moyen d'étanchéité.

Avantageusement, le rotor étant agencé pour être monté dans le stator selon une direction de montage suivant l'axe, la position de test se trouve avant la position de fonctionnement suivant ladite direction de montage.

Cela permet d'intégrer naturellement un test du premier moyen d'étanchéité dans la procédure de montage. Ainsi on peut commencer par installer le rotor dans le stator, s'arrêter en une position intermédiaire pour effectuer le test, puis terminer l'installation en continuant la translation du rotor dans le même sens. Par ailleurs, il n'est pas nécessaire de prévoir d'aménagements pour pouvoir dépasser la position de fonctionnement suivant l'axe avant de revenir en position de fonctionnement, ce qui peut être difficile voire impossible dans la turbomachine.

Dans une autre variante de réalisation, le moyen auxiliaire d'étanchéité en pression est agencé pour être inactif au cours d'un premier fonctionnement, lorsque le rotor tourne à une vitesse au moins égale à une valeur déterminée.

Avantageusement, le moyen d'étanchéité auxiliaire en pression comprend un joint d'étanchéité en pression solidaire de l'un des corps parmi le rotor ou le stator, agencé pour appuyer sur une surface cylindrique d'étanchéité lorsque le rotor est fixe en rotation par rapport au stator et pour s'éliminer lorsque le rotor entre en rotation.

Un tel joint, par exemple de la cire d'abeille peur s'éliminer sous l'effet de la chaleur provoquée par les frottements. Avec cette technique, la position de test peut être axialement la même que la position de fonctionnement, ce évite des manipulations et rend plus compact le dispositif global.

Avantageusement, le stator et le rotor sont agencés pour former une enceinte de lubrification d'un dispositif situé axialement entre lesdits deux moyens d'étanchéité lorsque le rotor est dans sa position de fonctionnement.

L'enceinte de lubrification va pouvoir servir ici d'enceinte de dépressurisation entre le premier joint et le joint auxiliaire en pression. Avantageusement, l'enceinte de lubrification, conçue pour retenir l'huile autour du palier n'a pas d'autres ouvertures que les passages du rotor au travers du stator et des orifices de passage de l'huile entre l'enceinte et le circuit de lubrification. En mettant le rotor dans la position de test, le premier moyen d'étanchéité et le moyen auxiliaire d'étanchéité en pression bouchent les passages du rotor. Il suffit alors d'obturer les orifices de passage de l'huile sauf un pour aspirer l'air dans l'enceinte de lubrification et créer une dépression pour tester l'état du premier joint d'étanchéité.

De préférence, l'ensemble comporte des moyens radiaux d'étanchéité à l'huile entre le rotor et le stator, situés entre le palier et le deuxième moyen d'étanchéité en pression et actifs lorsque le rotor est dans la première position axiale. De cette manière ces moyens d'étanchéité à l'huile empêchent la pollution du deuxième moyen d'étanchéité en pression par l'huile de l'enceinte de lubrification.

De préférence, le premier moyen d'étanchéité comprend un joint radial d'étanchéité en pression, par exemple un joint radial segmenté, solidaire de l'un des corps parmi le rotor ou le stator, agencé pour appuyer sur une surface cylindrique d'étanchéité, solidaire de l'autre corps, lorsque ledit premier moyen est actif.

Il s'agit donc d'un moyen d'étanchéité en pression lorsque le rotor est dans la position de fonctionnement, par exemple pour contrôler la dépressurisation de l'enceinte de lubrification lorsque la turbomachine fonctionne.

De préférence, le joint radial d'étanchéité est radialement extérieur à la surface cylindrique d'étanchéité.

Cela permet, notamment lorsque la direction de montage fait que le premier joint d'étanchéité se trouve en amont du palier, d'éviter que le joint radial ne passe au travers du palier lors du montage et soit détérioré. Cela permet également d'utiliser une extension de la surface d'étanchéité coopérant avec le joint radial d'étanchéité pour placer entre lui et le palier, un moyen, par exemple une vrille, coopérant avec cette surface d'étanchéité pour protéger le joint de l'huile de l'enceinte de lubrification.

Avantageusement, ledit premier joint étant placé radialement à l'extérieur, la surface cylindrique d'étanchéité s'étend axialement dans le sens de la direction de montage, au-delà de sa partie en contact du joint radial d'étanchéité dans la position de fonctionnement, sur une distance au moins égale à celle séparant la position de fonctionnement de la position de test.

De cette manière, la surface cylindrique d'étanchéité s'étend axialement de sorte que le joint radial d'étanchéité soit en contact de manière continue avec la surface d'étanchéité lorsqu'on déplace le rotor entre les positions de test et de fonctionnement. Cela permet d'éviter des chocs de rencontre du joint avec ces surfaces entre les tests et le fonctionnement, pouvant le détériorer.

En général, le stator entoure radialement le rotor. Les parties d'un moyen d'étanchéité liées au stator sont dans ce cas radialement extérieures aux parties correspondantes liées au rotor.

Avantageusement, un capot annulaire entourant le palier est agencé pour empêcher des projections radiales de l'huile ayant lubrifié le palier, et au moins un moyen d'étanchéité à l'intérieur de l'enceinte comporte, en direction du palier, une bague en continuité de sa partie radialement la plus interne, ladite bague ayant un diamètre extérieur au moins égal au diamètre intérieur dudit capot. De préférence, ladite bague recouvre au moins partiellement ledit capot annulaire lorsque le rotor est dans la première position axiale. Cela permet d'éviter des projections directes d'huile provenant du palier. De préférence, ladite bague recouvre au moins partiellement ledit capot lorsque le rotor est dans la première position axiale.

L'invention concerne également une turbomachine comportant un élément tel que décrit précédemment.

L'invention concerne aussi un procédé de test d'un premier moyen d'étanchéité dans un élément de turbomachine selon l'invention, comprenant une étape consistant à installer le rotor dans ladite position de test, à réaliser un orifice d'aspiration d'air dans l'enceinte, puis à établir une dépression dans l'enceinte entre le premier moyen d'étanchéité et le moyen auxiliaire d'étanchéité en pression, en aspirant l'air par ledit orifice.

### Brève description des figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
La figure 1 présente schématiquement une coupe méridienne d'un stator et d'un rotor selon un mode de réalisation de l'invention lorsque le rotor est en position de fonctionnement dans une turbomachine.
La figure 2a présente schématiquement une coupe méridienne du stator et du rotor de la figure 1, en position écartée et prêts à être assemblés.
La figure 2b présente schématiquement une coupe méridienne d'un stator et d'un rotor selon une variante de réalisation de l'invention, en position écartée et prêts à être assemblés.
La figure 3 présente schématiquement une coupe méridienne du stator et du rotor de la figure 1, dans une position intermédiaire de test.
La figure 4 présente schématiquement une coupe méridienne d'un stator et d'un rotor selon une variante de réalisation de l'invention lorsque le rotor est en position de fonctionnement dans une turbomachine.

### Description d'un mode de réalisation :

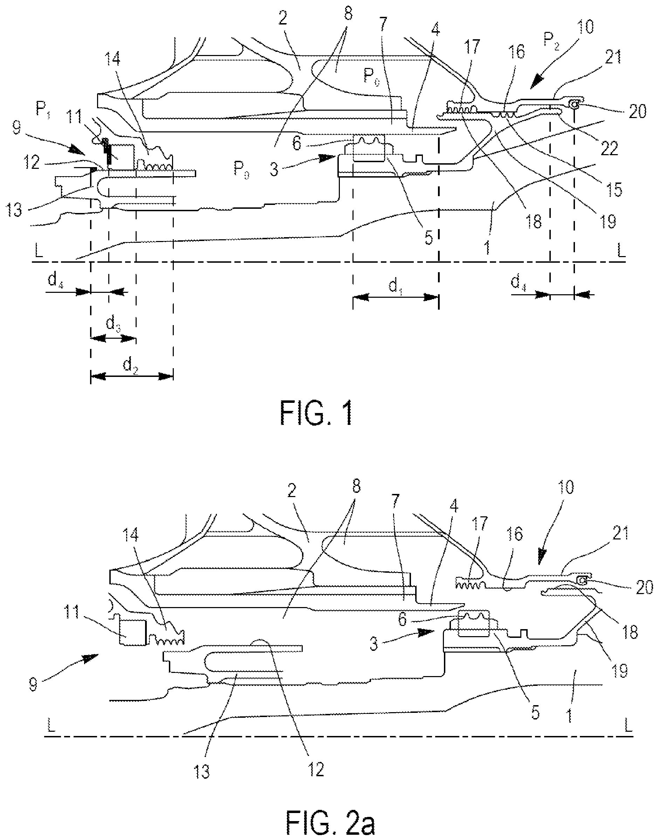

La figure 1 représente un arbre 1 de turbomachine mobile en rotation autour d'un axe LL, installé en position de fonctionnement dans un carter 2, au niveau d'un palier 3 de guidage de l'arbre 1 dans la turbomachine.

Sur la figure 1 et les suivantes, l'écoulement principal des gaz dans la turbomachine va de la gauche vers la droite. Les éléments représentés dans l'exemple correspondant aux figures se trouvent dans une partie de la turbomachine entourée par cet écoulement principal. Dans la suite de la description, les termes amont et aval s'entendent par rapport à cet écoulement principal.

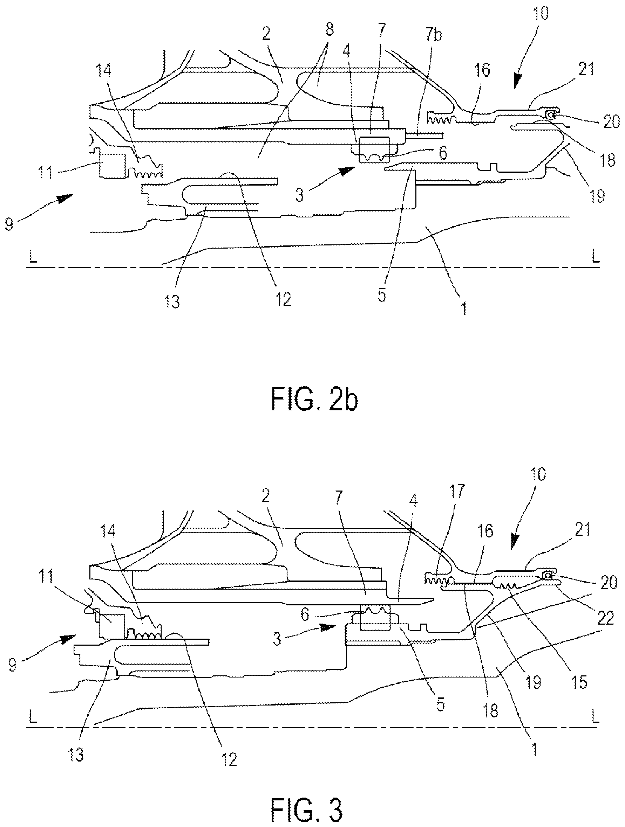

Le palier 3 de guidage est formé notamment par une bague extérieure 4, fixée au carter 2, et une bague intérieure 5, fixée à l'arbre 1, entre lesquelles des rouleaux 6 peuvent rouler librement. Le palier 3 est conçu de telle sorte que les rouleaux 6 restent maintenus à la bague intérieure 5 lorsque l'arbre 1 est déplacé hors de sa position de fonctionnement, pour les opérations de montage ou de démontage. D'autres roulements que les rouleaux, par exemple des billes, peuvent être utilisés. Il est par ailleurs envisageable de concevoir un palier 3, illustré sur la figure 2b, où les roulements 6 sont maintenus du côté de la bague extérieure 4 lorsqu'on démonte l'arbre 1 rotatif.

La bague extérieure 4 est liée au carter 2 par une pièce 7 de support du palier 3. La bague intérieure 5 est en général fixée à la surface de l'arbre rotatif 1.

Le carter 2 et l'arbre rotatif 1 sont agencés pour former une enceinte 8 de lubrification 4 autour du palier 3. Cette enceinte 8 comprend un passage de l'arbre 1 en amont du palier 3 et un passage de l'arbre 1 en aval du palier 3.

L'enceinte 8 de lubrification fait partie du circuit de lubrification de la turbomachine. L'huile rentre dans l'enceinte 8 par un orifice d'arrivée, non représenté sur la figure puis est dirigée vers le palier 3 pour le lubrifier. L'huile ayant lubrifié le palier 3 en ressort en étant projetée dans différentes directions. L'enceinte 8 a notamment pour fonction de récupérer cette huile pour qu'elle reparte par un orifice de sortie, non représenté également sur la figure, de manière à la renvoyer vers le circuit de lubrification.

Pour éviter des pertes d'huiles, les passages de l'arbre 1 dans l'enceinte 8 sont équipés de moyens radiaux d'étanchéité 9, 10, aptes notamment à bloquer l'huile. De plus, notamment en vue d'améliorer l'étanchéité de ces moyens radiaux d'étanchéité 9, 10, lors de la rotation de l'arbre 1, l'élément est conçu pour que la pression P0 de l'enceinte 8 soit inférieure aux pressions P1, P2, se trouvant à l'extérieur des passages de l'arbre 1, lorsque la turbomachine fonctionne. Cette dépressurisation participe à l'étanchéité de l'enceinte 8.

Pour obtenir ce résultat, le moyen radial d'étanchéité 9 du passage amont comporte ici un joint radial d'étanchéité segmenté 11 (JRS), constitué d'un anneau d'étanchéité de segments de carbone maintenus plaqués les un contre les autres, solidaire du carter 2. Ce joint radial d'étanchéité segmenté 11 coopère avec une surface cylindrique 12 entrant en contact avec sa surface interne. La surface cylindrique 12 est montée sur un manchon 13 solidaire de l'arbre rotatif 1, dont la section dans un plan méridien a une forme de U parallèle à l'axe de rotation LL. Cette forme permet une élasticité suffisante pour que l'arbre 1 puisse être installé dans le carter 2 en allant ici de la droite vers la gauche suivant l'axe de rotation LL, puis que le joint radial segmenté 11 et la surface cylindrique 12 soient en appui lorsque l'arbre 1 est dans la position de fonctionnement par rapport au carter 2.

La conception du joint radial segmenté 11 permet une étanchéité suffisante pour freiner le passage de l'air et établir ainsi une différence de pression entre ses deux côtés. De cette manière, lorsque la turbomachine fonctionne, la pression P0 de l'enceinte 8 peut être maintenue à une valeur inférieure à la pression P1 qui s'établit dans l'espace en amont du moyen radial d'étanchéité 9 du passage amont, qui est en communication avec des zones de pression plus élevées dans la turbomachine.

Le moyen radial d'étanchéité 9 est complété par une vrille 14, à l'intérieur de l'enceinte 8 par rapport au joint radial segmenté 11. Cette vrille 14 coopère avec une partie de la surface cylindrique 12 s'étendant en aval de celle coopérant avec le joint radial segmenté 11. La vrille 14 a pour fonction de renvoyer vers l'enceinte 8 l'huile pouvant arriver jusqu'au passage amont et de protéger le joint radial segmenté 11 de cette huile.

Le moyen radial d'étanchéité 10 du passage aval de l'arbre rotatif 1 comporte un joint labyrinthe, constitué de léchettes 15 solidaires de l'arbre 1 qui rencontrent une surface cylindrique 16 solidaire du carter 2, en matériau abradable. Ce joint labyrinthe 15, 16, permet une bonne étanchéité au passage de l'huile.

Le joint labyrinthe 15, 16 n'est pas aussi efficace que le joint radial segmenté 11, 12 pour établir une différence de pression des gaz entre ses extrémités. Cependant, sur l'exemple présenté, l'écoulement des gaz autour de l'enceinte 8 de lubrification se faisant de la gauche vers la droite et le joint radial segmenté 11 bloquant l'écoulement d'air en amont, cela est suffisant pour que la pression P0 dans l'enceinte 8 reste également inférieure à la pression P2 qui s'établit dans l'espace en aval du joint labyrinthe 15, 16.

Le moyen radial d'étanchéité 10 du passage aval est ici également complété par une vrille 17, placée en amont du joint labyrinthe 15, 16. Cette vrille 17 coopère avec une bague 18 qui s'étend en amont de la surface cylindrique 16 du joint labyrinthe. La vrille 17 a pour fonction de renvoyer dans l'enceinte 8 l'huile pouvant arriver jusqu'au passage aval et de protéger le joint labyrinthe 15, 16, de cette huile.

La bague 18 coopérant avec la vrille 17 est sensiblement alignée avec le support des léchettes 15 du joint labyrinthe. L'élément est maintenu par un flasque 19 s'étendant à partir de l'arbre rotatif 1.

Selon un aspect de l'invention, le flasque 19 s'étend radialement de telle sorte que le diamètre de la bague 18 coopérant avec la vrille soit légèrement supérieur à celui de la bague extérieure 4 du palier 3.

De plus, en référence à la figure 2a, dans un mode de réalisation où les roulements 6 du palier 3 glissent sur la bague extérieure 4, l'extension vers l'aval de la bague extérieure 4 du palier et l'extension vers l'amont de la bague 18 coopérant avec la vrille 17 sont ici agencées de telle sorte que la bague 18 de la vrille 17 recouvre partiellement la bague extérieure 4 du palier 3.

Cette disposition fait qu'il n'y a pas de chemin direct entre le palier 3 et la vrille 17 du passage aval. Les projections d'huile, représentées par une flèche sur la figure 1 sont ainsi arrêtées par la bague. Cela permet d'avoir une configuration compacte en aval du palier 3, où le moyen radial d'étanchéité 10 du passage aval est proche du palier 3 mais où la vrille 17 est protégée des projections d'huile.

Dans l'alternative représentée, avec l'arbre 1 et le carter en position détachée sur la figure 2b, il est possible d'envisager que ce n'est pas la bague extérieure 4 du palier 3 qui s'étend sous la bague 18 de la vrille 17 mais une partie 7b de la pièce 7 support du palier 3. Cette partie 7b du support du palier n'a pas fonction de piste pour les roulements 6 mais elle forme alors un capot entourant radialement le palier 3 du côté aval et qui peut passer à l'intérieur de la bague 18 de la vrille 17 lorsque l'arbre 1 est en position de fonctionnement.

Selon un autre aspect de l'invention, l'arbre rotatif 1 est installé dans le carter 2 en étant translaté suivant l'axe de rotation LL. Sur les exemples présentés, en référence aux figures 2a et 2b, l'arbre 1 en position détachée se trouve en aval du carter 2 et le montage se fait suivant une direction allant de l'aval vers l'amont pour le rotor.

La figure 2a représente le montage de l'arbre juste avant l'accostage pour le mode de réalisation de la figure 1. L'allongement de la bague extérieure 4 du palier 3 est telle que les roulements 6, solidaires de l'arbre 1, entrent en contact avec elle avant que l'extrémité amont de la surface cylindrique 12 coopérant avec le joint radial segmenté 11 ne rencontre la partie aval de la vrille 14 du passage amont.

Cela correspond, en référence à la figure 1, au fait que, lorsque l'arbre 1 est installé en position de fonctionnement, la distance d1 séparant l'extrémité aval de la bague extérieure 4 de l'extrémité amont des roulements 6 du palier 3 est supérieure à la distance d2, séparant l'extrémité amont de la surface cylindrique 12 de l'extrémité aval de la vrille 14, pour le moyen radial d'étanchéité amont 9.

De cette manière, les parties du moyen radial d'étanchéité 9 du passage amont de l'arbre 1 accostent celles du carter 3 alors que les roulements 6 du palier 3 sont déjà engagés dans la bague extérieure 4 de roulement. Les mouvements de l'arbre 1 dans la translation pour le montage sont donc guidés par le palier 3 ce qui limite les risques de choc à l'accostage ou les efforts parasites lors de l'installation dans le moyen radial d'étanchéité 9.

Dans une variante, on peut simplement protéger le joint radial segmenté 11, qui est le plus fragile. Dans ce cas, la distance d1 séparant l'extrémité aval de la bague extérieure 4 de l'extrémité amont des roulements 6 du palier 3 est supérieure à la distance d3 séparant l'extrémité amont de la surface cylindrique 12 de l'extrémité aval du joint radial segmenté 11.

On peut aussi noter que dans cette configuration, les besoins d'extension de la bague extérieure 4 vers l'aval concordent pour la fonction de montage du joint radial segment 11 et pour la fonction de protection de la vrille 17 des projections d'huile venant du palier 3.

Dans un mode de réalisation préféré, en référence au figures 1 et figure 2a, les roulements 6 liés à l'arbre 1 accostent également la bague extérieure 4 avant que la bague 18 coopérant avec la vrille 17 en aval ne rencontre la surface cylindrique 16 coopérant avec les léchettes 15 du joint labyrinthe. Cela permet aussi de protéger des chocs le moyen radial d'étanchéité 10 du passage aval lors du montage.

Dans une variante de réalisation, représentée sur la figure 2b, les roulements 6 sont solidaires de la bague extérieure 4, fixée au carter 2. Dans ce cas, c'est la bague intérieure 5 qui a une extension vers l'amont, au-delà de l'endroit où s'effectue le roulement lorsque l'arbre 1 est en position de fonctionnement. Cette extension est telle que la bague intérieure 5 rencontre les roulements 6 avant que les parties solidaires du carter 2 et de l'arbre 2 des moyens radiaux d'étanchéité 9, 10, ne se rencontrent.

Selon encore un autre aspect de l'invention, en référence à la figure 3, un joint d'étanchéité en pression 20 est installé sur une bague 21 en aval de la surface cylindrique 16 coopérant avec les léchettes 15 du joint labyrinthe. L'arbre 1 et le carter 2 sont configurés pour que, ce joint d'étanchéité en pression 20 appuie sur une bague 22, solidaire de l'arbre 1 et prolongeant le joint labyrinthe 15, lorsque l'arbre 1 est dans une position déterminée, décalée de la position de fonctionnement, comme illustré sur la figure 3.

Le joint d'étanchéité en pression 20 est ici un joint « PTFE », pour polytétrafluoroéthylène, qui comprend une bague composée de ce matériau et enserrée par un ressort circulaire qui la presse contre la bague 22 de l'arbre 1. Ce type de joint permet d'assurer une bonne étanchéité à la pression avec des frottements faibles. De plus ces joints résistent à des températures élevées, qui peuvent se rencontrer à cet endroit dans une turbomachine en fonctionnement.

Il est cependant envisageable d'utiliser des joints formés d'autres matériaux, à condition qu'ils permettent d'assurer une étanchéité en pression autour de l'arbre à son passage au travers de l'enceinte et qu'ils supportent les conditions d'environnement d'une turbomachine. Par contre, comme on le verra par la suite dans les conditions d'utilisation, il n'est pas nécessaire qu'ils fonctionnent avec un frottement faible lorsque l'arbre 1 est en rotation.

Sur la figure 3, l'arbre 1 et le carter 2 déjà présentés sur les figures 1 et 2a sont dans une configuration où l'arbre est translaté dans une position intermédiaire, l'arbre étant décalé d'une distance d4 vers l'aval par rapport à la position de fonctionnement de la figure 1.

Cette distance d4 correspond sur la figure 1, à un décalage du joint « PTFE » 20 par rapport à sa position d'appui sur la bague 22, de telle sorte qu'il se trouve dégagé de cette bague 22 lorsque l'arbre 1 est en position de fonctionnement.

De la sorte, lorsque l'arbre 1 est en position de fonctionnement, comme on peut le voir sur la figure 1, le joint « PTFE » 20 est dégagé de la bague 22. Dans l'exemple présenté, ce joint 20 n'est donc pas actif lorsque l'arbre 1 est en position de fonctionnement et les moyens 21, 22, avec lesquels il coopère, n'interagissent pas ensemble ou avec d'autres éléments de la turbomachine lorsque l'arbre 1 est en position de fonctionnement. Ces moyens 20, 21, 22 n'introduisent donc pas de frottement ou de perturbation lorsque la turbomachine fonctionne. De plus, dans l'exemple, étant à l'extérieur de l'enceinte 8, ils moyens 20, 21, 22 ne risquent pas d'être pollués par des projections d'huile du palier 3.

Par ailleurs, la distance d4 de translation vers la position intermédiaire est inférieure à la distance d1 précédemment décrite sur la figure 1, nécessaire pour dégager les roulements 6 du palier 3 de la bague extérieure 4. On passe donc de la position de fonctionnement à la position intermédiaire, et inversement, en effectuant une translation de l'arbre 1 par rapport au carter 2 suivant l'axe de rotation LL, l'arbre 1 étant guidé par le contact des roulements 6 du palier 3 avec les bagues intérieure 5 et extérieure 4.

De plus, en référence à la figure 2a ou 2b, le joint « PTFE » 20 et sa bague 21 support ont, de préférence, un diamètre légèrement supérieur à ceux des parties 18, 15 solidaires de l'arbre 1 du moyen radial d'étanchéité 10, pour le passage aval. On peut donc effectuer l'installation de l'arbre 1 dans le carter 2 sans que le joint « PTFE » 20 ne vienne frotter sur ces éléments 18, 15.

D'autre part, au niveau du moyen d'étanchéité radial amont 9, la surface cylindrique 12 est ici augmentée vers l'amont d'une valeur au moins égale à la distance d4 de décalage entre la position de fonctionnement et la position intermédiaire.

De cette manière, comme on peut le voir sur la figure 3, lorsque l'arbre est en position intermédiaire, le joint radial segmenté 11 coopère avec la surface cylindrique 12 et le joint « PTFE » 20 coopère avec la bague 22 de telle sorte qu'une étanchéité en pression est assurée en même temps aux deux passages de l'arbre 1 dans l'enceinte de lubrification 8.

Cette position intermédiaire définit avantageusement une position de test pour le joint radial segmenté 11. En effet, le joint radial segmenté 11 se trouvant dans le passage amont de l'arbre 1, il devient inaccessible lorsque celui-ci est installé dans le carter 2. Il est alors impossible d'effectuer des contrôles directs pour vérifier son état.

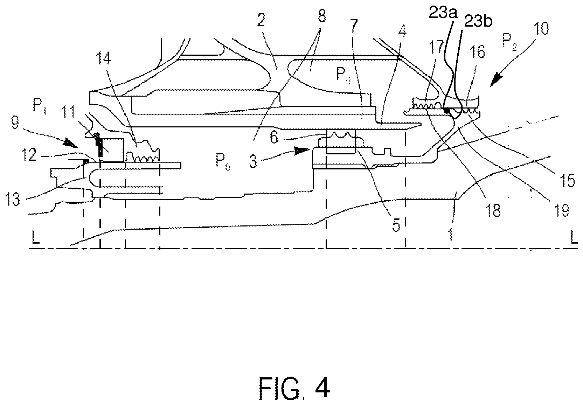

Dans une variante de réalisation, illustrée sur la figure 4, la position de test est la même que la position de fonctionnement. Dans cette variante, un joint en anneau 23b est inséré dans une gorge 23b ménagée dans une partie de la surface cylindrique 18 du rotor coopérant avec la vrille 17 sur le stator. Ce joint en anneau 23b appuie, dans cette position, contre la surface cylindrique 16 du stator coopérant avec le labyrinthe 15 du stator, de manière à assurer une étanchéité en pression lorsque que le rotor ne tourne pas.

Le joint en anneau 23b est réalisé ici dans un matériau, par exemple de la cire d'abeille, qui fond sous l'effet de la chaleur provoquée par les frottements lorsque le rotor se met en rotation, lors de ses conditions de fonctionnement. De cette manière, il s'élimine lorsque la turbomachine fonctionne et ne crée pas de pertes par frottements.

Avec la configuration illustrée sur la figure 3, la procédure de montage peut être avantageusement complétée par une procédure de test.

Pour cela, après avoir réalisé l'accostage des roulements 6 et de la bague correspondante 4 du palier 3, une première étape consiste à continuer on continue la translation de l'arbre 1 vers l'amont jusqu'à la position intermédiaire.

Dans cette position, le joint « PTFE » 20 assure l'étanchéité en pression au passage aval de l'arbre 1 dans l'enceinte de lubrification 8. D'autre part, si le joint radial segmenté 11 fonctionne correctement, il assure l'étanchéité en pression au passage amont en coopérant avec l'extension prévue à cet effet de la surface cylindrique 12 solidaire de l'arbre 1.

On peut donc effectuer une étape de test dans cette position, en utilisant, par exemple, les orifices de passage de l'huile dans l'enceinte de lubrification 8 pour aspirer l'air et créer une dépression dans l'enceinte 8. L'observation de l'évolution de la pression dans l'enceinte de lubrification 8 renseigne alors sur l'état du joint radial segmenté 11. S'il a été détérioré, par exemple lors de la rencontre avec la surface cylindrique 12, il laissera des fuites trop importantes qui feront remonter rapidement la pression.

Si le test de dépressurisation montre, par contre, que le joint radial segmenté 11 est en bon état, l'étape suivante consiste à poursuivre la translation de l'arbre 1 vers l'amont pour l'amener à sa position de fonctionnement dans le carter 2.

Avantageusement, les parties de la surface cylindrique 12, solidaire de l'arbre 1, coopérant avec le joint radial segmenté 11 en position de fonctionnement et en position intermédiaire, de test, forment une seule face continue. De cette manière, lorsqu'on translate l'arbre 1 d'une position à l'autre, le joint radial segmenté 11 reste en contact avec cette face. Il n'y a donc pas de risque de détérioration du joint 11 par des chocs à la rencontre de faces différentes.

Dans une variante, le test du joint radial segmenté 11 peut être fait après une période de fonctionnement de la turbomachine. Dans ce cas, la première étape consiste à décaler l'arbre 1 vers l'aval de la distance d4 pour le faire passer de la position de fonctionnement à la position intermédiaire, de test, puis d'effectuer le test de dépressurisation. Si le test est concluant, on peut alors replacer l'arbre 1 dans sa position de fonctionnement, sans avoir été obligé de le démonter complètement du carter 2.

Avec la variante de réalisation correspondant à la figure 4, la première étape de la procédure de test au montage consiste, après avoir réalisé l'accostage des roulements 6 et de la bague correspondante 4 du palier 3, à continuer la translation de l'arbre 1 vers l'amont jusqu'à la position de fonctionnement, qui est également la position de test. Durant cette étape, le matériau du joint en anneau 23a peut se déformer pour glisser contre la surface cylindrique 17, tout en étant maintenu en position sur le rotor 1 par la gorge 23b.

Ensuite, le rotor étant maintenu immobile on peut effectuer les mêmes étapes que dans la variante précédente pour effectuer le test du joint radial d'étanchéité, le joint en anneau 23a assurant l'étanchéité à l'autre extrémité par pression contre la surface cylindrique 17. Par contre, il n'y a pas d'étape de translation après le test puisque le rotor est déjà dans sa position de fonctionnement.

Puis dans une étape ultérieure, lorsque la turbomachine est assemblée le joint en anneau 23a, fait ici de cire d'abeille, fond lors de la première mise en fonctionnement de la turbomachine et disparaît. Sa disparition entraîne qu'il n'y a plus de contact à cet endroit entre le rotor et le stator, donc que les pertes par frottement y sont nulles.

L'avantage de cette variante est qu'il n'est pas nécessaire de prévoir d'extension radiale complémentaire de la surface cylindrique 12 pour que le joint radial d'étanchéité 11 soit actif durant la procédure de test au montage. L'ensemble peut donc être plus compact.

## Revendications

1. Élément de turbomachine comprenant un stator (2), un rotor (1), et un premier moyen d'étanchéité (9) entre le rotor (1) et le stator (2) agencé pour être actif lorsque le rotor est dans une position de fonctionnement autour de son axe de rotation (LL), élément **caractérisé en ce qu'**il comprend un moyen d'étanchéité auxiliaire (20, 22) en pression, entre le rotor (1) et le stator(2), **en ce qu'**il est agencé pour que lesdits deux moyens d'étanchéité soient actifs lorsque le rotor (1) est placé le long de son axe de rotation (LL) lors d'une opération de montage dans une position de test, le rotor (1) et le stator(2) formant, dans cette position de test, une enceinte (8) entre lesdits deux moyens d'étanchéité (9, 20-21), et **en ce que** le moyen auxiliaire (20, 21) d'étanchéité en pression est agencé pour être ou devenir inactif lorsque le rotor (1) est placé dans une position de fonctionnement.

2. Élément de turbomachine selon la revendication 1, dans lequel le moyen auxiliaire (20, 21) d'étanchéité en pression est agencé pour être inactif avant tout fonctionnement de l'élément de turbomachine.

3. Élément de turbomachine selon la revendication 2, dans lequel le moyen d'étanchéité auxiliaire (20, 22) en pression comprend un joint d'étanchéité (20) en pression solidaire de l'un des corps parmi le rotor ou le stator, agencé pour appuyer sur une surface cylindrique (22) d'étanchéité lorsque le rotor est dans une position de test décalée axialement d'une distance déterminée (d4) par rapport à la position de fonctionnement et pour en être dégagé lorsque le rotor (1) est en position de fonctionnement.

4. Élément de turbomachine selon la revendication 3, comportant en outre un palier (3) entre le stator (1) et le rotor (2), ledit palier (3) comportant des roulements (6) entre une première (4) et une deuxième (5) bague, l'une (4) d'entre elles étant solidaire du stator (2) et l'autre (5) étant solidaire du rotor (1), **caractérisé en ce que** la première bague (4) permet un glissement axial des roulements (6) et que son extension axiale est agencée pour servir de surface de guidage du rotor sur l'axe de rotation (LL) lors d'un déplacement de la position de fonctionnement vers la position de test ou inversement.

5. Élément de turbomachine selon l'une des revendications 3 et 4, dans lequel le rotor (1) étant agencé pour être monté dans le stator (1) selon une direction de montage suivant l'axe (LL), la position de test se trouve avant la position de fonctionnement suivant ladite direction de montage.

6. Élément de turbomachine selon la revendication 1, dans lequel le moyen auxiliaire (20, 21) d'étanchéité en pression est agencé pour être inactif au cours d'un premier fonctionnement, lorsque le rotor tourne à une vitesse au moins égale à une valeur déterminée.

7. Élément de turbomachine selon la revendication 6, dans lequel le moyen d'étanchéité auxiliaire (23a, 23b, 16) en pression comprend un joint d'étanchéité (23a) en pression solidaire de l'un des corps parmi le rotor ou le stator, agencé pour appuyer sur une surface cylindrique (16) d'étanchéité lorsque le rotor est fixe en rotation par rapport au stator et pour s'éliminer lorsque le rotor entre en rotation.

8. Élément de turbomachine selon l'une des revendications précédentes, dans lequel le stator(2) et le rotor (1) sont agencés pour former une enceinte (8) de lubrification d'un dispositif (3) situé axialement entre lesdits deux moyens d'étanchéité (9, 20-21) lorsque le rotor (1) est dans sa position de fonctionnement.

9. Élément de turbomachine selon l'une des revendications précédentes, dans lequel le premier moyen d'étanchéité (9) comprend un joint radial d'étanchéité (11) en pression, par exemple un joint radial segmenté, solidaire de l'un des corps parmi le rotor ou le stator, agencé pour appuyer sur une surface cylindrique (12) d'étanchéité, solidaire de l'autre corps, lorsque ledit premier moyen est actif.

10. Turbomachine comportant un élément selon l'une des revendications 1 à 9.

11. Procédé de test d'un premier moyen d'étanchéité (9) dans un élément de turbomachine selon l'une des revendications 1 à 9, comprenant une étape consistant à installer le rotor (1) dans ladite position de test, à réaliser un orifice d'aspiration d'air dans l'enceinte (8), puis à établir une dépression dans l'enceinte (8) entre le premier moyen d'étanchéité (9) et le moyen auxiliaire (20,21) d'étanchéité en pression, en aspirant l'air par ledit orifice.

## Patentansprüche

1. Turbomaschinenelement, das einen Stator (2), einen Rotor (1), und ein erstes Dichtungsmittel (9) zwischen dem Rotor (1) und dem Stator (2) umfasst, welches dafür eingerichtet ist, um aktiv zu sein, wenn sich der Rotor in einer Betriebsstellung um seine Drehachse (LL) herum befindet, wobei das Element **dadurch gekennzeichnet ist, dass** es ein zusätzliches Druckdichtungsmittel (20, 22) zwischen dem Rotor (1) und dem Stator (2) umfasst, dadurch, dass es dafür eingerichtet ist, damit die zwei Dichtungsmittel aktiv sind, wenn der Rotor (1) bei einem Einbauvorgang in einer Teststellung entlang seiner Drehachse (LL) gesetzt wird, wobei der Rotor (1) und der Stator (2) in dieser Teststellung einen abgeschlossenen Raum (8) zwischen den zwei Dichtungsmitteln (9, 20-21) bilden, und dadurch, dass das zusätzliche Druckdichtungsmittel (20, 21) dafür eingerichtet ist, um inaktiv zu sein oder zu werden, wenn der Rotor (1) in eine Betriebsstellung gesetzt wird.

2. Turbomaschinenelement nach Anspruch 1, wobei das zusätzliche Druckdichtungsmittel (20, 21) dafür eingerichtet ist, um vor jedem Betrieb des Turbomaschinenelements inaktiv zu sein.

3. Turbomaschinenelement nach Anspruch 2, wobei das zusätzliche Druckdichtungsmittel (20, 22) eine fest mit einem der Körper aus dem Rotor oder dem Stator verbundene Druckdichtung (20) umfasst, die dafür eingerichtet ist, um auf eine zylindrische Dichtungsfläche (22) zu drücken, wenn sich der Rotor in einer Teststellung befindet, die in Bezug auf die Betriebsstellung um einen bestimmten Abstand (d4) axial versetzt ist, und dafür, um davon abgerückt zu werden, wenn sich der Rotor (1) in Betriebsstellung befindet.

4. Turbomaschinenelement nach Anspruch 3, weiter einen Lagerbock (3) zwischen dem Stator (1) und dem Rotor (2) aufweisend, wobei der Lagerbock (3) Lager (6) zwischen einem ersten (4) und einem zweiten (5) Ring aufweist, wobei einer (4) unter ihnen fest mit dem Stator (2) verbunden ist, und der andere (5) fest mit dem Rotor (1) verbunden ist, **dadurch gekennzeichnet, dass** der erste Ring (4) ein axiales Gleiten der Lager (6) ermöglicht, und dass seine axiale Erstreckung dafür eingerichtet ist, um bei einer Verlagerung von der Betriebsstellung zur Teststellung oder umgekehrt als Führungsfläche des Rotors auf der Drehachse (LL) zu dienen.

5. Turbomaschinenelement nach einem der Ansprüche 3 und 4, wobei der Rotor (1) dafür eingerichtet ist, um gemäß einer der Achse (LL) folgenden Einbaurichtung im Stator (1) eingebaut zu werden, wobei sich die Teststellung der Einbaurichtung folgend vor der Betriebsstellung befindet.

6. Turbomaschinenelement nach Anspruch 1, wobei das zusätzliche Druckdichtungsmittel (20, 21) dafür eingerichtet ist, um im Laufe eines ersten Betriebs, wenn der Rotor mit einer Geschwindigkeit von mindestens gleich einem vorbestimmten Wert dreht, inaktiv zu sein.

7. Turbomaschinenelement nach Anspruch 6, wobei das zusätzliche Druckdichtungsmittel (23a, 23b, 16) eine fest mit einem der Körper aus dem Rotor oder dem Stator verbundene Druckdichtung (23a) umfasst, die dafür eingerichtet ist, um auf eine zylindrische Dichtungsfläche (16) zu drücken, wenn der Rotor in Bezug auf den Stator drehfest ist, und dafür, um sich zu entfernen, wenn der Rotor in Drehung gerät.

8. Turbomaschinenelement nach einem der vorstehenden Ansprüche, wobei der Stator (2) und der Rotor (1) dafür eingerichtet sind, um einen abgeschlossenen Raum (8) zur Schmierung einer Vorrichtung (3) zu bilden, welche axial zwischen den zwei Dichtungsmitteln (9, 20-21) liegt, wenn sich der Rotor (1) in seiner Betriebsstellung befindet.

9. Turbomaschinenelement nach einem der vorstehenden Ansprüche, wobei das erste Dichtungsmittel (9) eine radiale Druckdichtung (11) umfasst, zum Beispiel eine fest mit einem der Körper aus dem Rotor oder dem Stator verbundene segmentierte radiale Dichtung, die dafür eingerichtet ist, um auf eine fest mit dem anderen Körper verbundene zylindrische Dichtungsfläche (12) zu drücken, wenn das erste Mittel aktiv ist.

10. Turbomaschine, die ein Element nach einem der Ansprüche 1 bis 9 aufweist.

11. Verfahren zum Testen eines ersten Dichtungsmittels (9) in einem Turbomaschinenelement nach einem der Ansprüche 1 bis 9, umfassend einen Schritt, der darin besteht, den Rotor (1) in der Teststellung zu installieren, eine Luftabsaugöffnung in dem abgeschlossenen Raum (8) auszuführen, und anschließend durch Absaugen der Luft durch die Öffnung einen Unterdruck in dem abgeschlossenen Raum (8) zwischen dem ersten Dichtungsmittel (9) und dem zusätzlichen Druckdichtungsmittel (20, 21) aufzubauen.

## Claims

1. Turbine engine element comprising a stator (2), a rotor (1), and a first sealing means (9) between the rotor (1) and the stator (2) which is arranged so as to be active when the rotor is in an operating position around the axis of rotation (LL) thereof, the element being **characterised in that** it comprises an auxiliary pressurised sealing means (20, 22), between the rotor (1) and the stator (2), **in that** it is arranged so that said two sealing means are active when the rotor (1) is placed along the axis of rotation (LL) thereof during a process of mounting in a test position, the rotor (1) and the stator (2) forming, in said test position, an enclosure (8) between said two sealing means (9, 20-21), and **in that** the auxiliary pressurised sealing means (20, 21) is arranged so as to be or become inactive when the rotor (1) is placed in an operating position.

2. Turbine engine element according to claim 1, wherein the auxiliary pressurised sealing means (20, 21) is arranged so as to be inactive before any operation of the turbine engine element.

3. Turbine engine element according to claim 2, wherein the auxiliary pressurised sealing means (20, 22) comprises a pressurised sealing joint (20) which is rigidly connected to one of the bodies among the rotor or the stator, arranged so as to rest on a cylindrical sealing surface (22) when the rotor is in a test position which is axially offset by a distance (d4) which is determined with respect to the operating position and so as to be removed from said sealing surface when the rotor (1) is in the operating position.

4. Turbine engine element according to claim 3, further comprising a bearing (3) between the stator (1) and the rotor (2), said bearing (3) comprising roller bearings (6) between a first ring (4) and a second ring (5), one (4) of said rings being rigidly connected to the stator (2), and the other (5) being rigidly connected to the rotor (1), **characterised in that** the first ring (4) allows the rolling bearings (6) to slide axially, and **in that** the axial extension of said first ring is arranged so as to act as a surface for guiding the rotor along the axis of rotation (LL) during a movement from the operating position to the test position or inversely.

5. Turbine engine element according to either claim 3 or claim 4, wherein, the rotor (1) being arranged so as to be mounted in the stator (1) in a mounting direction along the axis (LL), the test position is located before the operating position along said mounting direction.

6. Turbine engine element according to claim 1, wherein the auxiliary pressurised sealing means (20, 21) is arranged so as to be inactive during a first operation when the rotor rotates at a speed which is at least equal to a predetermined value.

7. Turbine engine element according to claim 6, wherein the auxiliary pressurised sealing means (23a, 23b, 16) comprises a pressurised sealing joint (23a) which is rigidly connected to one of the bodies among the rotor or the stator, arranged so as to rest on a cylindrical sealing surface (16) when the rotor is fixed in rotation with respect to the stator and so as to be removed when the rotor is set into rotation.

8. Turbine engine element according to any of the preceding claims, wherein the stator (2) and the rotor (1) are arranged so as to form an enclosure (8) for lubricating a device (3) which is located axially between said two sealing means (9, 20-21) when the rotor (1) is in the operating position thereof.

9. Turbine engine element according to any of the preceding claims, wherein the first sealing means (9) comprises a radial pressurised sealing joint (11), for example a segmented radial joint, which is rigidly connected to one of the bodies among the rotor or the stator and is arranged so as to rest on a cylindrical sealing surface (12), which is rigidly connected to the other body, when said first means is active.

10. Turbine engine comprising an element according to any of claims 1 to 9.

11. Method for testing a first sealing means (9) in a turbine engine element according to any of claims 1 to 9, comprising a step consisting in installing the rotor (1) in said test position, producing an air suction opening in the enclosure (8), and then creating a negative pressure in the enclosure (8) between the first sealing means (9) and the auxiliary pressurised sealing means (20, 21), by sucking the air through said opening.
